(19) Europäisches Patentamt
European Patent Office
Office européen des brevets

(11) EP 3 118 234 A1

(12) EUROPEAN PATENT APPLICATION

(43) Date of publication:
**18.01.2017 Bulletin 2017/03**

(21) Application number: **15176793.6**

(22) Date of filing: **15.07.2015**

(51) Int Cl.:
***C08G 18/58*** *(2006.01)* ***C08G 18/66*** *(2006.01)*
***C08G 18/76*** *(2006.01)* ***C08G 18/10*** *(2006.01)*
***C09D 175/06*** *(2006.01)* ***C08G 18/32*** *(2006.01)*
***C08G 18/38*** *(2006.01)* ***C08G 18/44*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ALLNEX AUSTRIA GmbH**
**8402 Werndorf (AT)**

(72) Inventors:
- **TEMEL, Armin**
**8042 Graz (AT)**
- **LUNZER, Florian**
**8010 Graz (AT)**
- **ARZT, Anton**
**8430 Neu-Tillmitsch (AT)**
- **SCHAFHEUTLE, Markus**
**8043 Graz (AT)**
- **MEISNER, Ursula**
**8041 Graz (AT)**

(74) Representative: **Deckers, Hellmuth Alexander et al**
**European Patent Attorney**
**Breitbachstrasse 15**
**55218 Ingelheim am Rhein (DE)**

# (54) COATING COMPOSITIONS

(57) The invention relates to a coating composition comprising a polyurethane **ABC** having tertiary amine groups, and an epoxide-functional compound **D,** to a process for the preparation of an aqueous dispersion of a polyurethane **ABC** comprising a first step wherein a polyurethane prepolymer is made from diols or polyols **A,** multifunctional isocyanates **B,** and at least one diol C bearing a tertiary amino group, a second step comprising reacting the prepolymer with a chain stopper which is monofunctional with regard to reaction thereof with isocyanates, or a chain extender which has two or more reactive groups that react with isocyanate, a third step comprising neutralising the product of the second step with an acid, and a fourth step comprising dispersing the neutralised product of the third step in water, and to a method of use of these coating compositions comprising mixing the polyurethane **ABC** and the epoxide functional compound **D,** and applying the coating compositions to substrates selected from the group consisting of metals, coated metals, plastics, glass, concrete, wood, cardboard, and leather.

EP 3 118 234 A1

## Description

### Field of the Invention

This invention relates to coating compositions comprising a polyurethane ABC having tertiary amine groups in its polymer chain or pendant thereto, and an epoxide-functional compound D having at least 1.1 epoxide groups per molecule. It also relates to a process for producing these coating compositions, and to their application in the coating of substrates.

### Background of the Invention

In the formation of cured coating films, chemical crosslinking which is based on polymerisation and three-dimensional crosslinking within the paint film has reached a high market share due to the speed of curing, particularly for those curing agents that are based on polyaddition, and not polycondensation reactions because of the absence of volatile byproducts evolved during the curing process when using the first-mentioned curing agents.

Isocyanate curing agents belong to the class of curing agents where the curing process is a polyaddition, and sets in already at ambient temperature, which is about 23 °C. However, monomeric isocyanates present an environmental and occupational health risk due to the high reactivity and toxicity of these chemicals. Many attempts have been made to identify curing agents based on other chemistries that have similar performance, but less environmental and health risk. These alternative curing agents are frequently referred to as "non-isocyanate", abbreviated as "NISO", crosslinkers.

Coating compositions based on polyurethane dispersions ("PUDs") that are crosslinked with isocyanate-based curing agents have found wide acceptance in the market. However, the use of waterborne two-pack polyurethane systems is restricted because of issues with "popping", viz., generation of carbon dioxide as side reaction from water and free isocyanate in areas of high film build. As an alternative to isocyanate cure, it was discovered in the experiments that have led to the present invention that polyurethanes bearing tertiary amino groups in the backbone can be cured with diepoxides like BADGE (bisphenol A diglycidyl ether) or aliphatic diepoxides to obtain coating films with good appearance, fast hardness development, good mechanical properties and excellent chemical resistance.

Crosslinking of epoxy resins with an acrylate copolymer having tertiary amino groups had been known from DE 1 106 492 B. There is no mention of a similar reaction with polyurethanes where the crosslinker is a multifunctional epoxide compound.

### Summary of the Invention

The subject of the present invention is therefore is a two-pack coating system comprising a polyurethane **ABC** having at least one tertiary amino group per molecule, as resinous part, which is preferably present in the form of an aqueous dispersion, and a compound D having at least 1.1, preferably two or more, epoxide groups per molecule, as crosslinker. The crosslinking chemistry of these two components is understood as a quarternisation reaction between the tertiary amino groups of the polyurethane **ABC** with the epoxide groups of the multifunctional epoxide crosslinker **D.**

### Detailed Description of the Preferred Embodiments

The polyurethane **ABC** comprises building blocks derived from polymeric diols or polyols **A,** from multifunctional isocyanates **B** having at least two free isocyanate groups per molecule, and from at least one tertiary amine **C** having at least one reactive group that reacts with isocyanates, selected from the group consisting of hydroxyl groups, amino groups, hydrazine groups, hydrazide groups, and mercaptane groups. In the reaction of a hydroxy-functional compound X-OH (here, compounds **A** and **C** inasmuch as one of the reactive groups is a hydroxyl group) with an isocyanate functional compound Y-N=C=O (here, compound B), a urethane compound is formed in an addition reaction as

$$X - OH + Y - N = C = O \ -> X - O - CO - NH - Y,$$

which has the building blocks X and Y which are connected by a urethane bond. A "building block derived from" a diol or polyol means the said diol or polyol wherefrom at least one hydroxyl group has been consumed under formation of a urethane bond, and likewise, a "building block derived from" a multifunctional isocyanate means the said multifunctional isocyanate wherefrom at least one isocyanate group has been consumed under formation of a urethane bond. A "polyol" is, for the purpose of this invention, an organic compound having more than two hydroxyl groups.

The polymeric diols or polyols **A** preferably have a number-average molar mass $M_n$ of from more than 800 g/mol up to 5000 g/mol, in particular from 1000 g/mol to 4000 g/mol. Their hydroxyl value is generally between 30 mg/g and 280 mg/g, preferably from 40 mg/g to 200 mg/g and in particular from 50 mg/g to 160 mg/g. Difunctional polyols **A** are preferably used; up to 5 % of the mass of the polyols **A** can also be replaced by trihydric or polyhydric polyols, however. A trihydric polyol has three hydroxyl groups, and a polyhydric polyol has more than three hydroxyl groups, for the purpose of this invention.

An oligomeric polyol, in the context of this invention, has up to ten repeating units, and a polymeric polyol has more than ten repeating units.

Examples of such polyols **A,** which are compounds known from polyurethane chemistry, are polyether polyols, polyester polyols, polycarbonate polyols, polyesteramide polyols, polyamidoamide polyols, epoxy resin polyols and their reaction products with $CO_2$, polyacrylate polyols, polyolefin polyols, perhydrogenated polyolefin polyols, and the like. Such polyols, which can also be used mixed together, are described for example in DE 20 20 905, DE 23 14 513, DE 31 24 784, and in EP 0 120 466. Castor oil can also be used as the polyol component.

Of these polyols, polyether polyols, polycarbonate polyols and polyester polyols are preferred, particularly those which have only terminal hydroxyl groups and have an average functionality of not more than 3, preferably of 2.8 to 2, and in particular of 2. Particularly preferred are polycarbonate diols.

Examples of polyether polyols which can be cited here are polyoxyethylene polyols, polyoxypropylene polyols, polyoxybutylene polyols and preferably polytetrahydrofuranes having terminal OH groups.

The preferred polycarbonate polyols are derived from dihydric alcohols such as propylene glycol, 1,4-butanediol, 1,6-hexane diol, and 1,5-(3-methyl)pentanediol, or mixtures thereof.

The polyester polyols which are particularly preferred according to the invention are the known polycondensates from organic di- and optionally poly- (tri-, tetra-) hydroxy compounds and di- and optionally poly- (tri-, tetra-) carboxylic acids or hydroxycarboxylic acids or lactones. The corresponding polycarboxylic anhydrides or corresponding polycarboxylic acid esters of lower alcohols such as methanol and ethanol can also be used in place of the free polycarboxylic acids to prepare the polyesters. Examples of suitable diols are ethylene glycol, 1,2-butanediol, diethylene glycol, triethylene glycol, polyalkylene glycols, such as polyethylene glycol, also 1,2- and 1,3-propanediol, 1,4-butanediol, 1,6-hexanediol, neopentyl glycol or hydroxypivalic acid neopentyl glycol ester. Trimethylol propane, trimethylol ethane, glycerol, erythritol, pentaerythritol, ditrimethylol propane, dipentaerythritol, trimethylol benzene or trishydroxyethyl isocyanurate can be cited here as examples of polyols having three or more hydroxyl groups in the molecule which can optionally additionally be used. Aromatic and cycloaliphatic dicarboxylic acids, linear and branched alkyl and alkenyl dicarboxylic acids and dimeric fatty acids are suitable as dicarboxylic acids. Examples include: phthalic acid, isophthalic acid, terephthalic acid, tetrahydrophthalic acid, hexahydrophthalic acid, cyclohexane dicarboxylic acid, adipic acid, succinic acid, azelaic acid, sebacic acid, glutaric acid, chlorendic acid, tetrachlorophthalic acid, maleic acid, fumaric acid, itaconic acid, malonic acid, suberic acid, 2-methylsuccinic acid, 3,3-diethyl glutaric acid, 2,2-dimethylsuccinic acid, octenylsuccinic acid and dodecenylsuccinic acid. Anhydrides of these acids, where they exist, can also be used. The expression "acid" here includes the anhydrides. Secondary amounts (in a mass fraction of up to 10 %, relative to the total mass of all acids) of monocarboxylic acids, such as benzoic acid and hexanecarboxylic acid can also be used. Saturated aliphatic or aromatic acids are preferred, such as adipic acid or isophthalic acid. Trimellithic acid, trimesic acid, pyromellithic acid and polyanhydrides, as described in DE 28 11 913 A1, or mixtures of two or more such compounds, are cited here as polycarboxylic acids that can optionally additionally be used in smaller amounts, in a mass fraction of up to 10 %, relative to the total mass of all acids.

The hydroxycarboxylic acids which can be used as reaction partners in the preparation of a polyester polyol having terminal hydroxyl groups are, for example, hydroxycaproic acid, hydroxybutyric acid, hydroxydecanoic acid, hydroxystearic acid. Suitable lactones which can be used in the synthesis of the polyester polyols include, inter alia, caprolactone, butyrolactone and valerolactone.

The mass fraction of building blocks derived from the polyols A in the polyurethane resin **ABC** is generally from about 15 % to 60 %, preferably from 20 % to 57 %, and especially preferred, from 25 % to 54 %, based on the mass of the polyurethane resin.

The multifunctional isocyanates **B** are at least difunctional and may be selected from the group consisting of aromatic and aliphatic linear, cyclic, and branched isocyanates, especially diisocyanates. Preference is given to diisocyanates, in which case it is possible for up to 5 % of their mass to be replaced by isocyanates with a functionality of three or more.

The diisocyanates preferably correspond to the formula $Q(NCO)_2$, in which Q stands for a hydrocarbon radical having from 4 to 40 carbon atoms, in particular from 4 to 20 carbon atoms, and preferably denotes an aliphatic hydrocarbon radical having from 4 to 12 carbon atoms, a cycloaliphatic hydrocarbon radical having from 6 to 15 carbon atoms, an aromatic hydrocarbon radical having from 6 to 15 carbon atoms or an araliphatic hydrocarbon radical having from 7 to 15 carbon atoms. Examples of such diisocyanates which can be used with preference are tetramethylene diisocyanate, hexamethylene diisocyanate, dodecamethylene diisocyanate, 1,4-diisocyanatocyclohexane, 3-isocyanatomethyl-3,5,5-trimethylcyclohexyl isocyanate (also referred to as isophorone diisocyanate, IPDI), 4,4'-diisocyanatodicyclohexylmethane, 4,4'-diisocyanato-dicyclohexylpropane-(2,2),1,4-diisocyanatobenzene, 2,4- or 2,6-diisocyanatotoluene or mixtures of these isomers, 4,4'- or 2,4'-diisocyanatodiphenylmethane, 4,4'-diisocyanato-diphenylpropane-(2,2), p-xylylene diisocyanate, and $\alpha,\alpha,\alpha',\alpha'$-tetramethyl-m- or -p-xylylene diisocyanate, and mixtures of these compounds.

As well as these simple multifunctional isocyanates, suitable multifunctional isocyanates of formula $Z(NCO)_n$, where n is the number of isocyanate groups in the multifunctional isocyanate, include those which contain heteroatoms in the radical Z linking the isocyanate groups. Examples thereof are multifunctional isocyanates containing carbodiimide groups, allophanate groups, isocyanurate groups, urethane groups, acylated urea groups or biuret groups. For further suitable multifunctional isocyanates, refer for example to DE 29 28 552 A1.

Also suitable are the so-called "paint polyisocyanates" based on hexamethylene diisocyanate or on 1-isocyanato-3,3,5-trimethyl-4-isocyanatomethylcyclohexane (IPDI) and/or bis(isocyanatocyclohexyl)methane, especially those based exclusively on hexamethylene diisocyanate. "Paint polyisocyanates" on the basis of these diisocyanates are those derivatives of these diisocyanates that are known per se and contain biuret, urethane, uretdione and/or isocyanurate groups and that, following their preparation, have been freed where appropriate from excess starting diisocyanate in a known way, preferably by distillation, down to a residual mass fraction of less than 0.5 %. The preferred aliphatic multifunctional isocyanates for use in accordance with the invention include such isocyanates which meet the above criteria, contain biuret groups, and are based on hexamethylene diisocyanate, such as may be obtained, for example, by the processes of US patents 3124 605, 3 358 010, 3 903126, 3 903127 or 3 976 622, which are composed of mixtures of N,N,N-tris(6-isocyanatohexyl) biuret with minor amounts of its higher homologues, and also the cyclic trimers of hexamethylene diisocyanate which meet the stated criteria and can be obtained in accordance with US 4 324 879 A, and which are composed essentially of N,N,N-tris(6-isocyanatohexyl) isocyanurate in a mixture with minor amounts of its higher homologues. Particular preference is given to mixtures of multifunctional isocyanates which meet the stated criteria, contain uretdione and/or isocyanurate groups, and are based on hexamethylene diisocyanate, such as are formed by catalytic oligomerisation of hexamethylene diisocyanate using trialkylphosphanes. Particular preference is given to the last-mentioned mixtures with a viscosity at 23 °C of from 50 mPa·s to 20 Pa·s and a number of isocyanate groups per molecule, also referred to as NCO functionality, of between 2.0 and 5.0.

The aromatic multifunctional isocyanates which are likewise suitable in accordance with the invention but are preferably to be used in a mixture with the abovementioned aliphatic multifunctional isocyanates include in particular "paint polyisocyanates" based on 2,4-diisocyanatotoluene or its technical-grade mixtures with 2,6-diisocyanatotoluene or on 4,4-diisocyanatodiphenylmethane and/or its mixtures with its isomers and/or higher homologues. Aromatic paint polyisocyanates of this kind are, for example, the isocyanates which contain urethane groups, such as are obtained by reacting excess amounts of 2,4-diisocyanatotoluene with polyhydric alcohols such as trimethylolpropane and then where appropriate removing the unreacted diisocyanate excess by distillation. Examples of further aromatic paint polyisocyanates are the trimers of the monomeric diisocyanates exemplified, i.e., the corresponding isocyanato-isocyanurates, which following their preparation may have been rid, preferably by distillation, from excess monomeric diisocyanates. In the mixtures of aromatic and (cyclo)aliphatic isocyanates, the amounts of these two components are chosen such as to ensure that the isocyanate groups of the prepolymer are exclusively or at least 90 % (cyclo)-aliphatically attached (meaning that the carbon atom carrying the isocyanate group is a member of a cycloaliphatic ring or an aliphatic chain).

The isocyanate component B may further be composed of any desired mixtures of the isocyanates exemplified.

The mass fraction of building blocks derived from the multifunctional isocyanates B in the polyurethane resin is generally from about 25 % to 60 %, preferably from 30 % to 56 %, and especially preferred, from 35 % to 52 %, based on the mass of the polyurethane resin.

The tertiary amines C have at least one reactive group, and preferably, two reactive groups that react with isocyanate, selected from the group consisting of hydroxyl groups, amino groups, hydrazine groups, hydrazide groups, and mercaptane groups. Preferred are diols C bearing a tertiary amino group and two hydroxyl groups, particularly N-alkyl-N,N-bis(hydroxy-alkyl)amines of formula I

$$R^1\text{-N}(R^2\text{-OH})_2 \qquad \text{(Formula I)}$$

where $R^1$ is a linear or branched alkyl group having from one to twelve carbon atoms, and $R^2$ is an alkylene group of from two to forty carbon atoms, preferably from two to twelve carbon atoms. Such preferred aminodiols are N-methyl diethanol amine, N-ethyl diethanol amine, N-propyl diethanol amine, N-methyl dipropanol amine, N-ethyl dipropanol amine, N-methyl dibutanol amine, N-ethyl dibutanol amine, and N-propyl dipropanol amine. These aminediols are easily accessible by alkoxylation of primary aliphatic amines.

Such diols have been known in the art, and have been described, in DE 26 51 505 A1 and DE 26 59 617 A1 as mentioned supra, where N-alkyl-N,N-bis-hydroxyalkylamines are used. Quaternary ammonium diols have been described in US 6 339 125 where a bis(hydroxyalkyl) quaternary ammonium group-containing diol is used.

Further preferred diols C are the compounds of formula II

$$\begin{matrix} HO - A^1 \\ HO - A^2 \end{matrix} > CH - A^3 - NR^3R^4 \qquad \text{(Formula II)},$$

wherein

- $R^3$ and $R^4$ can be the same, or can be different, and are independently of each other alkyl groups having from one to eight carbon atoms, preferably selected from the group consisting of methyl, ethyl, n-propyl, n-butyl, and i-butyl, and
- $A^1$ and $A^2$ are independently a direct bond or an alkylene having from one to four carbon atoms, preferably selected from the group consisting of methanediyl $-CH_2-$, 1,2-ethanediyl $-CH_2-CH_2-$, 1,3-propanediyl $-CH_2-CH_2-CH_2-$, and 1,4-butanediyl $-CH_2-CH_2-CH_2-CH_2-$, with the proviso that $A^1$ and $A^2$ are not both a direct bond, and
- $A^3$ is a direct bond or an alkylene group, preferably selected from the group consisting of methanediyl $-CH_2-$, 1,2-ethanediyl $-CH_2-CH_2-$, 1,3-propanediyl $-CH_2-CH_2-CH_2-$, and 1,4-butanediyl $-CH_2-CH_2-CH_2-CH_2-$, or an alkylene group wherein one or more non-adjacent $-CH_2-$ groups have been replaced by an oxy group -O- or an alkylimine group $-NR^5-$, where
- $R^5$ is an alkyl group having from one to eight carbon atoms, preferably selected from the group consisting of methyl, ethyl, n-propyl, n-butyl, and i-butyl.

Preferred compounds according to this formula are 2-(dimethylamino)-1,3-propanediol, 2-(diethylamino)-1,3-propanediol, 3-(diethylamino)-1,2-propanediol, 2-(dimethylamino)-1,4-butanediol, 2-(diethylamino)-1,4-butanediol and mixtures thereof.

Other preferred diols have more than one tertiary amino group, such as N,N'-bis-hydroxyethyl piperazine and 3-{[2-(dimethylamino)ethyl](methyl)amino}-1,2-propanediol which has the formula III

(Formula III).

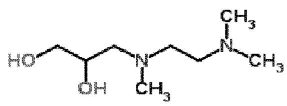

Particulary preferred diols C are N-methyldiethanolamine (MDEA), and the diol of formula III.

Tertiary aliphatic amines C having from five to twenty-five carbon atoms and further isocyanate-reactive groups which are selected from the group consisting of amino groups, hydrazine groups, hydrazide groups, and mercaptane groups are preferably selected from the group consisting of N-methyl-2,2'-diaminoethylamine; tris(2-aminoethyl)amine; N,N'-bis(2-aminoethyl)-piperazine; 2,2'-N-methyliminodiacetic acid dihydrazide; nitrilotriacetic acid trihydrazide; N,N-diethyl-2,3-dimercaptopropyl-amine, CAS No. 27143-84-6; N,N-di-n-propyl-2,3-dimercaptopropyl-amine, CAS No. 90795-45-2; and homologues of the compounds mentioned here.

Preferably, the mass fraction of building blocks derived from the tertiary amines **C** having at least one reactive group selected from the group consisting of hydroxyl groups, amino groups, hydrazine groups, hydrazide groups, and mercaptane groups, in the polyurethane **ABC** is from 2 % to 30 %, particularly preferred, from 4 % to 24 %, and especially preferred from 8 % to 18 %.

The polyurethane **ABC** is synthesised by reacting polymeric diols or polyols **A,** multifunctional isocyanates **B** having at least two free isocyanate groups per molecule, and at least one diol **C** bearing a tertiary amino group.

Fully reacted polyurethanes which are dissolved in solvents such as aliphatic hydrocarbons, aliphatic esters, and aliphatic ketones, can be used that are based on polyols **A** which are preferably polyesterpolyols or polycarbonatepolyols, multifunctional isocyanates **B** which are preferably 4,4'-diisocyanato-diphenylmethane or isophorone diisocyanate, and a diol **C** having a tertiary amino group, optionally together with other diols such as 1,4-butanediol, 1,6-hexanediol, or neopentyl glycol to control the crosslinking density.

Aqueous dispersions of polyurethanes are preferred, however. When preparing an aqueous dispersion of the polyurethane **ABC,** the following procedure is preferably used.

The reaction to form a polyurethane prepolymer from oligomeric or polymeric diols or polyols **A,** multifunctional isocyanates **B** having at least two free isocyanate groups per molecule, and at least one diol **C** bearing one tertiary amino group is preferably carried out to reach a predetermined mass fraction of residual free isocyanate groups ($m$(NCO)/$m$(resin)) in the solid resin which is normally in the range of from 0.5 % to 5 %. The temperature in this reaction phase is normally in the range of from 30 °C to 140 °C. If needed, the prepolymer may be diluted by addition of an inert solvent (e.g., dipropyleneglycol dimethylether) to reduce the viscosity.

In the reaction to form the prepolymer, it is also possible to additionally include low molar mass diols or polyols, including oligomeric species of these, preferably aliphatic diols having a molar mass of less than 800 g/mol, such as ethyleneglycol, diethyleneglycol, 1,2- or 1,3-propylene glycol, 1,2- or 1,4 -butylene glycol, 1,5-pentanediol, 3-methyl-1,5-pentanediol ("MPD"), 1,6-hexanediol, and 1,8-octane diol, and also dimeric fatty alcohols, up to the branched alpha,omega-dihydroxy hexa-triacontanediol obtained from dimerisation and hydrogenation of unsaturated $C_{18}$ fatty acids.

The prepolymer is then either chain stopped by adding a compound that is monofunctional with regard to reaction thereof with isocyanates, also referred to as "chain stopper", or it is subjected to chain extension by addition of a compound that is multifunctional, i. e. having two or more than two reactive groups that react with isocyanate, also referred to as "chain extender".

Chain stopping is normally realised by adding compounds bearing one secondary amino group to the prepolymer bearing free isocyanate groups. The most used chain stopper is diethanolamine (DOLA). The chain stopper is introduced in a stoichiometric amount to react with all residual free isocyanate groups, whereafter the ready polyurethane is neutralised by an acid, such as acetic acid, formic acid, or lactic acid, and then dispersed in water.

In another embodiment, the chain stopper is introduced in a substoichiometric amount, leaving a part of the isocyanate groups of the prepolymer unreacted, and this partially reacted prepolymer is then subjected to chain extension.

Chain extension is preferably carried out in the aqueous phase, by adding compounds that have two or more functional groups that react with isocyanate groups under addition. Preferred chain extenders are compounds bearing hydrazine or hydrazide groups, particularly dihydrazides of aliphatic dicarboxylic acids. It was found that primary amines and secondary amines can also be used with preference as chain extenders. The chain extender is either introduced shortly before, in parallel or shortly after the step when the neutralised prepolymer is dispersed into water so that the build-up of larger molecules is located within the dispersion particles. Dispersion of the prepolymer in water can further be assisted by addition of solvents that are miscible with water, such as methoxypropanol.

The preferred process for the preparation of an aqueous dispersion of a polyurethane ABC therefore comprises

- a step a wherein a polyurethane prepolymer is made from oligomeric or polymeric or polyols A having at least two hydroxyl groups per molecule and a number average molar mass Mn of at least 500 g/mol, multifunctional isocyanates B having at least two free isocyanate groups per molecule, and at least one tertiary amine C having at least one reactive group selected from the group consisting of hydroxyl groups, amino groups, hydrazine groups, hydrazide groups, and mercaptane groups, the reaction preferably being carried out to reach a predetermined mass fraction of residual free isocyanate groups ($m$(NCO)/ $m$(resin)) in the solid resin which is in the range of from 0.5 % to 5 %, and
- optionally, a step b comprising reacting the polyurethane prepolymer of step a with a chain stopper **F** which is monofunctional with regard to reaction thereof with isocyanates,
- a step c comprising neutralising the product of step a or of step b with an acid,
- a step d comprising dispersing the neutralised product of step c in water,
- a step e comprising reacting

    - the product formed in step a, or
    - the product formed in step b wherein step b is conducted in a way that at most 95 % of the remaining isocyanate groups of the product of step a are consumed by the chain stopper added in step b,

  with a chain extender **G** which has two or more reactive groups that react with isocyanate, and wherein step e is conducted
- after step a is completed, and before step c has started, or
- after steps a and b are completed, and before step c has started, or
- after steps a and c are completed, and before step d has started, or
- after steps a, b, and c are completed, and before step d has started, or
- after steps a and c are completed, during step d, or
- after steps a, b, and c are completed, during step d, or
- after steps a, c, and d are completed, or
- after steps a, b, c, and d are completed.

The chain stopper **F** is monofunctional with regard to reaction thereof with isocyanates, and is preferably selected from the group consisting of monoamines, especially mono-secondary amines, or monoalcohols. Examples that may be mentioned here include the following: methylamine, ethylamine, n-propylamine, n-butylamine, n-octylamine, laurylamine, stearylamine, isononyloxypropylamine, dimethylamine, diethylamine, di-n- and di-isopropylamine, di-n-butylamine, N-methylaminopropylamine, diethyl- and dimethylaminopropylamine, morpholine, piperidine, and suitably substituted derivatives thereof, amidoamines formed from diprimary amines and monocarboxylic acids, and monoketimines of diprimary amines, and primary/ tertiary amines, such as N,N-dimethylaminopropylamine.

Suitable compounds **F** preferably also include those containing active hydrogen with a reactivity which differs with respect to NCO groups, especially compounds which contain not only a primary amino group but also secondary amino groups, or which contain not only an OH group but also COOH groups or not only an amino group (primary or secondary) but also OH groups, the latter being particularly preferred. Examples of such compounds include the following: primary/secondary amines, such as 3-amino-1-methylaminopropane, 3-amino-1-ethylaminopropane, 3-amino-1-cyclohexylaminopropane, 3-amino-1-methylaminobutane; monohydroxy carboxylic acids, such as hydroxyacetic acid, lactic acid or malic acid, and also alkanolamines such as N-aminoethylethanolamine, ethanolamine, 3-aminopropanol, neopentanolamine, and N-methyl glucamine, and, with particular preference, diethanolamine and N-methyl glucamine.

The chain extender **G** is at least difunctional, preferably exactly difunctional, with regard to reaction thereof with isocyanates, and is preferably selected from the group consisting of water, primary and secondary diamines, such as such as ethylenediamine, 1,3-diaminopropane, 1,4-diaminobutane, methylpentandiamine, and hexamethylenediamine, wherein the amines may carry substituents such as OH groups, hydrazine, substituted hydrazines, dihydrazides of dicarboxylic acids, such as adipic dihydrazide, and dimercaptans.

The chain extender **G** should ideally be used in stoichiometric amount with regard to the remaining isocyanate groups, i. e. the amount of substance of isocyanate-reactive groups in G should correspond to the amount of substance of residual isocyanate groups in the polyurethane prepolymer before addition of chain extender **G,** corresponding meaning that there may be ratio of amount of substance of isocyanate groups to amount of substance of isocyanate-reactive groups between 1.25 mol/mol to 0.8 mol/mol. If chain extension is made in water, unreacted isocyanate groups will usually be consumed by water, too.

Other methods of preparation of an aqueous dispersion of the polyurethane **ABC** include the so-called acetone process where the polyaddition reaction of the polyols **A** and the diol **C** having a tertiary amino group with the multifunctional isocyanate **B,** as well as the subsequent chain extension step are conducted in a homogeneous solvent phase, using preferably acetone, or other aliphatic ketones, as solvent. After neutralisation and dispersion in water, the solvent is distilled off.

The multifunctional epoxide crosslinker **D** has at least an average of 1.1 epoxide groups per molecule, and preferably up to three. Any of glycidyl ethers of aliphatic diols or polyols or of aromatic dihydroxy or polyhydroxy compounds, and of glycidyl esters of aliphatic or aromatic dicarboxylic or polycarboxylic acids is useful as epoxide-functional crosslinker compound **D.** Other useful epoxide-functional compounds are epoxides made from diunsaturated aliphatic hydrocarbons having from six to twenty carbon atoms such as 1,2,5,6-bisepoxyhexane, and 1,2,7,8-bisepoxyoctane. Preferred are diglycidyl ethers of aliphatic diols or of aromatic dihydroxy compounds, and diglycidyl esters of aliphatic or aromatic dicarboxylic acids. The crosslinking density can be adapted to the intended application by admixing epoxide functional compounds of higher functionality, such as triglycidyl ethers of trifunctional aliphatic alcohols which are preferably glycerol, trimethylol ethane, or trimethylol propane, or epoxide functional compounds having only one epoxide group per molecule, such as hexylglycidylether, or glycidylneodecanoate. Particularly preferred compounds D are the diglycidyl ether of bisphenol A, the diglycidyl ether of oligomeric or polymeric oxyalkylenediols such as polyethylene glycol or polypropylene glycol, and oligomers of these, the glycidylethers of trimethylol propane and trimethylol ethane, and triglycidylisocyanurate.

The polyurethane **ABC,** either as such or in the form of its aqueous dispersion made by any of the processes described supra is mixed with multifunctional epoxide crosslinker **D** prior to application to form a two-pack coating composition. The quantities of polyurethane **ABC** and multifunctional epoxide crosslinker **D** are preferably chosen in a way that the ratio of the amount of substance $n(\mathrm{N})$ of tertiary amino groups in the polyurethane **ABC** to the amount of substance $n(\mathrm{EP})$ of epoxide groups in the epoxide-functional compound **D** of $n(\mathrm{N})/\ n(\mathrm{EP})$ is between 2 mol/mol to 0.5 mol/mol. A higher degree of crosslinking is obtained if this ratio approaches 1 mol/mol.

The binder resins comprising the polyurethanes **ABC** and the epoxide-functional crosslinkers **D,** can be used to provide clearcoat coating compositions which also comprise usual additives such as flow modifiers, thickeners, defoamers, wetting agents, emulsifiers, surfactants, light or UV stabilisers, corrosion protection additives, compatibilising solvents, and coalescing agents, as well as catalysts. They can also be used to prepare pigmented coating compositions, comprising additionally at least one of pigments, fillers, colorants, dispersing agents, and antisettling agents. These binders can be used both in solvent borne or in water borne coating compositions. The coating compositions thus obtained can be used as sole coating, or as base layer, intermediate layer or topcoat in combination with other coating films on substrates such as metals, plastics, glass, concrete, plaster, paper, cardboard, leather, or textile fabrics.

It has been found that by combining two or more of the preferred embodiments mentioned hereinabove, coating compositions with particularly good properties can be obtained.

## Examples

In the description and examples, the following physicochemical properties are used:

The hydroxyl value or hydroxyl number $w_{\mathrm{OH}}$ is defined according to DIN EN ISO 4629 (DIN 53 240) as the ratio

of the mass of potassium hydroxide $m_{KOH}$ having the same number of hydroxyl groups as the sample, and the mass $m_B$ of that sample (mass of solids in the sample for solutions or dispersions); the customary unit is "mg/g".

The amine value or amine number has been defined according to ASTM D 2073 (DIN 51 639-1; 2014) as the ratio of the mass $m_{KOH}$ of potassium hydroxide that needs the same amount of substance of acid for neutralisation as a sample B, and the mass $m_B$ of that sample (mass of solids in the sample for solutions or dispersions); the customary unit is "mg/g".

The specific epoxide content is the ratio of the amount of substance *n*(EP) of epoxide groups in a sample B, and the mass *m*(B) of that sample. It is usually determined by titration with hydrogen bromide in glacial acetic acid, as described, e. g., in ASTM D 1652 -11, or also by IR spectrometry as described by U. M. Evtushenko et al in J. Analytical Chemistry 58 (2003), pp. 347 to 350.

The mass fraction w(S) of solids in a solution of dispersion of a polyurethane or polyacrylate is determined according to DIN 53 216 as the ratio of the mass *m*(S) of solid matter remaining after drying a sample B at a temperature of 125 °C for one hour, and the mass *m*(B) of the sample tested.

The dynamic viscosity $\eta$ of a dispersion is measured in a cone-and plate rotation viscometer at 23 °C and a shear rate of 100 $s^{-1}$, if not stated at a different shear rate, in accordance with EN ISO 2555 (corresponding to ASTM 7042-14).

Particle size in dispersions was measured with a Malvern Zetasizer® nano-S, by dynamic light scattering. Average values (the "Z-average" $d_z$ particle diameter) and polydispersity index *Đ*were directly calculated by the software provided.

The molar mass of polymers (usually number average $M_n$ or mass average $M_w$) was determined by high performance size exclusion chromatography (HPSEC), using a refractive index detector, tetrahydrofurane as solvent whereto a mass fraction of 1 % of n-butylamine had been added for the analysis of the polyurethanes according to this invention, at a flow of 1 ml/min, and using a calibration with polystyrene standards. In the case of polycarbonate diols, number average molar mass was calculated from the measured hydroxyl value.

Dust-free drying time was tested by applying a paint film to a glass plate with a wet film thickness of 200 $\mu$m. After drying for thirty minutes at room temperature (23 °C), coloured glass beads having a diameter of 1 mm were strewn over the paint layer, and the glass plate was turned over. The dust-free drying time is reached when no glass beads stick to the paint. When some or all beads stick to the paint, the test is repeated with sixty, ninety, and one hundred twenty minutes.

Solvent resistance (xylene, gasoline) was tested by applying a paint film to a glass plate with a wet film thickness of 200 $\mu$m. After drying for one week at room temperature (23 °C), a piece of cotton fabric impregnated with the liquid to be tested is placed onto the hardened paint film, and covered with a watch-glass. After intervals of 30 s; 1 min; 2 min; 3 min; 4 min; 5 min; 6 min; 7 min; 8 min; 9 min; and 10 min from the start, the piece of cotton was removed, and the contact area was scratched with a wooden spatula. A damage in the paint film indicates that the paint film has been attacked by the liquid, this was noted as the time of failure. To continue the test, the piece of cotton was replaced onto the same spot.

**Example 1 Synthesis of acrylic copolymer 1** (comparative)

A glass reactor having a volume of 250 ml equipped with reflux condenser, stirrer, and a monomer funnel was charged with 30 g of methylisobutylketone and heated to reflux temperature (116 °C). A mixture of 3 g of azo-bis-isovaleronitrile dissolved in 5 g of solvent naphtha 150/180 (commercial grade of a mixture of aromatic hydrocarbon compounds having a boiling temperature at atmospheric pressure of from 150 °C to 180 °C, mainly consisting of benzene, indene, coumarone, dicyclopentadiene and and methylstyrenes) and 7 g of methylisobutylketone, as well as a monomer mixture comprising 24 g of butyl methacrylate, 24 g of 2-ethylhexyl-acrylate, 11 g of methylmethacrylate, 28 g of hydroxyethylmethacrylate and 13 g of N.N-dimethylaminoethyl methacrylate were gradually added to this glass reactor over five hours. Temperature was maintained for further thirty minutes before the reaction was brought to completion by adding a mixture of 2.5 g of methylisobutylketone and 0.43 g of tert-butylperoctoate, and keeping the mixture at 116 °C for one more hour. Then, 5.0 g of glacial acetic acid were added, and the mass fraction of solids was adjusted to 29 % by adding water. The polymer formed had an amine value of 44 mg/g and a molar mass (mass average) $M_w$ of 10 720 g/mol.

**Example 2 Synthesis of polyurethane dispersion 1**

A mixture of 60 g of a polycarbonatediol (based on 1,6-hexanediol, ®Desmophen 2100, Bayer Material Science) having a number average molar mass of 1 kg/mol and a hydroxyl value of 112 mg/g, and 105 g of m-tetramethylxylylene diisocyanate (TMXDI) were reacted at a temperature of 107 °C until a mass fraction of isocyanate groups (-N=C=O, molar mass M= 42.017 g/mol) of 17 % was reached. The reaction mixture was then cooled down to 50 °C, and 35.4 g of N-methyl-diethanolamine were added, and the temperature was raised to 65 °C until the mass fraction of remaining

isocyanate groups had reached 3.2 %. A mixture of 12.10 g of adipic acid dihydrazide and 50 g of water was added, and the resulting mixture was stirred for five further minutes. Then, a mixture of 10.6 g of glacial acetic acid (mass fraction of acetic acid is 100 %) and 10.6 g of deionised water were added, followed by continuous addition of further 310 g of deionised water over the course of thirty minutes. The resulting polyurethane dispersion was adjusted with further portions of deionised water to a mass fraction of solids of 33 %, an amine value of 75 mg/g, and a dynamic viscosity of 2800 mPa·s. The average particle size was 41 nm at a polydispersity index of 0.29. The mass average molar mass $M_w$ was found to be 11 100 g/mol.

**Example 3 Synthesis of polyurethane dispersion 2**

A mixture of 60 g of a polycarbonatediol as used in example 2, having a number average molar mass of 1 kg/mol and a hydroxyl value of 112 mg/g, and 9.5 g of N-methyl-diethanolamine were heated to a temperature of 65 °C. 39.1 g of m-tetramethylxylylene diisocyanate (TMXDI) were added, and the temperature was maintained at 90 °C until a mass fraction of isocyanate groups of 1.6 % was reached. The reaction mixture was cooled to 90 °C before adding a mixture of 9.61 g of glacial acetic acid and 9.61 g of deionised water whereby a temperature of 80 °C was reached. Then, a mixture of 8.9 g of an intermediate made by reacting 0.4 mol of ethanolamine and 0.27 mol of butanediol diglycidylether which was dissolved in water to form a solution with a mass fraction of solids of 80 %, and 123 g of deionised water were added continuously over the course of ten minutes to reach a temperature of 60 °C. The resulting polyurethane dispersion was adjusted, by addition of further portions of deionised water, to a mass fraction of solids of 33 %. An amine value of 60 mg/g, and a dynamic viscosity of 34 mPa·s were measured on the resulting dispersion. The average particle size was 30 nm, at a polydispersity index of 0.73. The mass average molar mass $M_w$ was found to be 18 200 g/mol.

**Example 4 Formulation of Clearcoats and application on panels**

The polymer dispersions described in examples 1 (comparative) and 2 have been mixed with liquid epoxide functional compounds and stirred with a lab blender at a speed of 250 $min^{-1}$ for five minutes. The detailed formulations are given in Table 1. The mixing ratios were chosen such as to target an extent of reaction, corresponding to consumption of at least 85 % of the amino groups by epoxy groups. The coatings made therefrom have been applied to different substrates dependent on the intended test method:

- for determination of pendulum hardness, tack-free time and dust-free time, the coatings have been cast on glass panels at a wet film thickness of 200 µm;
- for mechanical resistance tests (Erichsen cupping, impact resistance and bend test), the coatings have been cast on cold rolled steel plates at a wet film thickness of 200 µm;
- for chemical resistance tests (MEK double rubs, xylene, gasoline), the coatings have been cast on CED coated steel panels at a wet film thickness of 200 µm.

Table 1 Clear Coating Preparation

| Paint No. | **1** | **2** | **3** | **4** |
|---|---|---|---|---|
| polyurethane dispersion 1 (example2) | 22.75 g | 22.75 g | | 25.28 g |
| acrylic copolymer (example 1) | | | 86.38 g | |
| aromatic diepoxide[1] | 1.53 g | | 3.06 g | |
| aliphatic diepoxide[2] | | 1.62 g | | |
| aliphatic triepoxide[3] | | | | 1.62 g |
| deionised water | 7.6 g | 5.3 g | | 2 g |

1: aromatic diepoxide based on bisphenol A diglycidylether; $n(EP)/m$ = 5.56 mol/kg
2: aliphatic diepoxide based on polypropylene glycol diglycidylether; $n(EP)/m$ = 5.26 mol/kg
3: aliphatic epoxide based on the triglycidylether of trimethylolpropane; $n(EP)/m$ = 6.90 mol/kg

The following results were obtained:

| Table 2 Test results | | | | | |
|---|---|---|---|---|---|
| Paint No. | | 1 | 2 | 3 (comp.) | 4 |
| Dust-free drying time | min | 60 | n. d. | 60 | 60 |
| Pendulum Hardness (DIN EN ISO 1522) | | | | | |
| *Room temperature* | | | | | |
| 1 day | | 80 | n. d. | 46 | 62 |
| 7 days | | 165 | n. d. | 87 | 142 |
| *1h / 80°C forced cure* | | | | | |
| 1 day | | 131 | n. d. | 87 | 95 |
| 7 days | | 164 | n. d. | 109 | 158 |
| Mechanical Resistance | | | | | |
| *Room temperature* | | | | | |
| Impact Resistance direct (ASTM D 2794) | J {in·lb} | 4.5 {40} | 5.6 {50} | 3.4 {30} | 5.6 {50} |
| Impact Resistance indirect (ASTM D 2794) | J {in·lb} | 0 | 5.6 {50} | 0 | 5.6 {50} |
| Erichsen Cupping (DIN EN ISO 1520) | mm | 112 | 111 | 109 | 116 |
| Bend test (DIN EN ISO 6860) | | pass | pass | pass | pass |
| *1h / 80°C forced cure* | | | | | |
| Impact Resistance direct (ASTM D 2794) | J {in·lb} | 5.6 {50} | 5.6 {50} | 1.1 {10} | 5.6 {50} |
| Impact Resistance indirect (ASTM D 2794) | J {in·lb} | 0 | 5.6 {50} | 0 | 5.6 {50} |
| Erichsen Cupping (DIN EN ISO 1520) | mm | 113 | 107 | 35 | 114 |
| Bend test (DIN EN ISO 6860) | | pass | pass | fail | pass |
| Chemical Resistance | | | | | |
| *Room temperature* | | | | | |
| MEK double-rubs (DIN EN 13523-11) | | > 200 | n. d. | > 200 | > 200 |
| Xylene | min | > 10 | n. d. | 1 | > 10 |
| Gasoline | min | > 10 | n. d. | 5 | > 10 |
| *1h / 80°C forced cure* | | | | | |
| MEK double-rubs (DIN EN 13523-11) | | > 200 | n. d. | > 200 | > 200 |
| Xylene[2] | min | > 10 | 10 | 5 | > 10 |
| Gasoline[2] | min | > 10 | n. d. | 5 | > 10 |
| n.d. stands for "not determined" | | | | | |

It can be seen that the coating compositions according to the invention have very good drying behaviour, and very good hardness and mechanical as well as chemical resistance.

## Claims

1. A coating composition comprising a polyurethane **ABC** having tertiary amine groups in its polymer chain or pendant thereto, and an epoxide-functional compound **D** having at least 1.1 epoxide groups per molecule.

2. The coating composition of claim 1 where the polyurethane **ABC** is aqueously dispersed.

**3.** The coating composition of any one of claims 1 and 2 wherein the polyurethane **ABC** has building blocks derived from polymeric diols or polyols **A** having at least two hydroxyl groups per molecule and a number average molar mass $M_n$ of at least 800 g/mol.

**4.** The coating composition of claim 3 wherein the polymeric diols or polyols A are polycarbonate diols.

**5.** The coating composition of any one of claims 1 and 2 wherein the polyurethane **ABC** has building blocks derived from multifunctional isocyanates **B** having at least two isocyanate groups per molecule.

**6.** The coating composition of any one of claims 1 and 2 wherein the polyurethane **ABC** has building blocks derived from tertiary amines **C** having at least one reactive group selected from the group consisting of hydroxyl groups, amino groups, hydrazine groups, hydrazide groups, and mercaptane groups.

**7.** The coating composition of claim 5 wherein the tertiary amine C has two reactive groups, which reactive groups are hydroxyl groups.

**8.** The coating composition of any one of claims 1 and 2 wherein the epoxide-functional compound D has at least two epoxide groups per molecule.

**9.** The coating composition of claim 8 wherein the epoxide-functional compound **D** is selected from the group consisting of glycidyl ethers of aliphatic diols or polyols, or of aromatic dihydroxy or polyhydroxy compounds, and of glycidyl esters of aliphatic or aromatic dicarboxylic or polycarboxylic acids, and of diepoxides made from aliphatic dienes having from four to twenty carbon atoms.

**10.** The coating composition of any one of claims 1 and 2 which further comprises at least one of pigments, fillers, defoamers, wetting agents, surfactants, emulsifiers, dispersing agents, flow modifiers, thickeners, antisettling agents, light or UV stabilisers, corrosion protection additives, compatibilising solvents, and coalescing agents.

**11.** A process for the preparation of an aqueous dispersion of a polyurethane **ABC** comprising

- a step a wherein a polyurethane prepolymer is made from oligomeric or polymeric or polyols **A** having at least two hydroxyl groups per molecule and a number average molar mass Mn of at least 500 g/mol, multifunctional isocyanates **B** having at least two free isocyanate groups per molecule, and at least one tertiary amine **C** having at least one reactive group selected from the group consisting of hydroxyl groups, amino groups, hydrazine groups, hydrazide groups, and mercaptane groups, the reaction preferably being carried out to reach a predetermined mass fraction of residual free isocyanate groups (*m*(NCO)/ *m*(resin)) in the solid resin which is in the range of from 0.5 % to 5 %, and
- optionally, a step b comprising reacting the polyurethane prepolymer of step a with a chain stopper **F** which is monofunctional with regard to reaction thereof with isocyanates,
- a step c comprising neutralising the product of step a or of step b with an acid,
- a step d comprising dispersing the neutralised product of step c in water,
- a step e comprising reacting

  - the product formed in step a, or
  - the product formed in step b wherein step b is conducted in a way that at most 95 % of the remaining isocyanate groups of the product of step a are consumed by the chain stopper added in step b,

with a chain extender **G** which has two or more reactive groups that react with isocyanate, and wherein step e is conducted
- after step a is completed, and before step c has started, or
- after steps a and b are completed, and before step c has started, or
- after steps a and c are completed, and before step d has started, or
- after steps a, b, and c are completed, and before step d has started, or
- after steps a and c are completed, during step d, or
- after steps a, b, and c are completed, during step d, or
- after steps a, c, and d are completed, or
- after steps a, b, c, and d are completed.

12. A process for the preparation of the coating compositions as claimed in any one of claims 1 and 2 comprising mixing the polyurethane **ABC** and the epoxide functional compound in a ratio of the amount of substance $n$(N) of tertiary amino groups in the polyurethane **ABC** to the amount of substance $n$(EP) of epoxide groups in the epoxide-functional compound **D** of $n(N)/\ n(\mathrm{EP})$ between 2 mol/mol to 0.5 mol/mol.

13. A method of use of the coating compositions as claimed in any of claims 1 and 2, or prepared according to claim 12 wherein the coating compositions are applied to substrates selected from the group consisting of metals, coated metals, plastics, glass, concrete, wood, cardboard, and leather.

Europäisches Patentamt
European Patent Office
Office européen des brevets

# EUROPEAN SEARCH REPORT

Application Number
EP 15 17 6793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/148640 A1 (YOSHIDA JUNICHI [JP] ET AL) 11 June 2009 (2009-06-11) * paragraphs [0101], [0103]; claims * | 1-13 | INV. C08G18/58 C08G18/66 C08G18/76 C08G18/10 C09D175/06 C08G18/32 C08G18/38 C08G18/44 |
| A | GB 2 368 302 A (KANSAI PAINT CO LTD [JP]) 1 May 2002 (2002-05-01) * page 53; claims; table 1 * | 1-13 | |

TECHNICAL FIELDS SEARCHED (IPC)
C08G
C09D

The present search report has been drawn up for all claims

1

| Place of search | Date of completion of the search | Examiner |
|---|---|---|
| Munich | 10 November 2015 | West, Nuki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 17 6793

This annex lists the patent family members relating to the patent documents cited in the above-mentioned European search report. The members are as contained in the European Patent Office EDP file on
The European Patent Office is in no way liable for these particulars which are merely given for the purpose of information.

10-11-2015

| Patent document cited in search report | Publication date | Patent family member(s) | Publication date |
|---|---|---|---|
| US 2009148640 A1 | 11-06-2009 | US 2009148640 A1<br>WO 2007023856 A1 | 11-06-2009<br>01-03-2007 |
| GB 2368302 A | 01-05-2002 | GB 2368302 A<br>US 2002056642 A1 | 01-05-2002<br>16-05-2002 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 1106492 B
- DE 2020905
- DE 2314513
- DE 3124784
- EP 0120466 A
- DE 2811913 A1
- DE 2928552 A1
- US 3124605 A
- US 3358010 A
- US 3903126 A
- US 3903127 A
- US 3976622 A
- US 4324879 A
- DE 2651505 A1
- DE 2659617 A1
- US 6339125 B


### Non-patent literature cited in the description


- **U. M. EVTUSHENKO et al.** *J. Analytical Chemistry,* 2003, vol. 58, 347-350